# EUROPÄISCHE PATENTANMELDUNG

(11) **EP 1 897 755 A2**
(43) Veröffentlichungstag der Anmeldung: **12.03.2008**
(21) Anmeldenummer: 07017741.5
(22) Anmeldetag: 11.09.2007
(51) Int. Cl.: B60R 5/04, B60R 7/02

(54) **Bodenplatte für einen Laderaum**

(30) Priorität: 11.09.2006 DE 102006043223
(71) Anmelder: KIPP GmbH & Co. KG Cargo & Safety Systems, 72172 Sulz (DE)
(72) Erfinder: Fischer, Sascha, 72186 Empfingen (DE); Trick, Frank, 72172 Sulz (DE)
(74) Vertreter: Kohler Schmid Möbus

(57) **Zusammenfassung**

Eine Bodenplatte 1 kann in einen Kofferraum eingelegt und mit Hilfe von Haftmitteln 4a, 4b, 4c lösbar auf einer Bodenfläche des Laderaums fixiert werden. Über die gesamte Länge L der Bodenplatte 1 erstrecken sich Führungsschienen 2a, 2b, zwischen denen eine ebene Ladefläche mit durchgängiger Bodenoptik bereit gestellt wird. Mit Hilfe von Anbauelementen, welche an der Bodenplatte 1 angeordnet und bedarfsabhängig entlang der Führungsschienen 2a, 2b verschoben werden können, kann Ladegut auf der Ladefläche fixiert und ein hinterer Bereich der Bodenplatte 1 leichter zugänglich gemacht werden.

## Beschreibung

Die Erfindung betrifft eine Bodenplatte, einsetzbar in einen Laderaum einen Kraftfahrzeuges, an deren Unterseite Haftmittel zur lösbaren Fixierung der Bodenplatte auf der Bodenfläche des Laderaums vorgesehen sind.

Eine derartige Bodenplatte, wie sie beispielsweise aus der DE 93 19 919 U1 bekannt geworden ist, kann nachträglich in einen Lade- bzw. Kofferraum eines Kraftfahrzeuges eingelegt werden und dient dort der Fixierung von Ladegut. Mit Hilfe der Haftmittel, wie Klettverschlüssen, ist die Bodenplatte wieder lösbar auf der Bodenfläche befestigt und gegen ein Verrutschen gesichert. Die Bodenplatte weist an ihrer Oberseite eine Mehrzahl von Nuten auf, in die verschieb- und arretierbare Ladegut-Halteelemente eingesetzt werden können. An den Halteelementen sind auswechselbare Halteabschnitte, wie Stäbe, Ringe oder Haken ausgebildet, mittels derer ein Ladegut festgebunden, verzurrt oder in anderer Weise positionsstabil gehalten werden kann. Zur Anpassung an unterschiedliche Ladegüter sind die Nuten bevorzugt schachbrettartig auf der Bodenplatte angeordnet. Der Nachteil dieser Bodenplatte liegt darin, dass die durch die Bodenplatte definierte Ladefläche nicht durchgängig ausgebildet ist, sondern von einer Vielzahl von Nuten unterbrochen ist. Darüber hinaus ist ein hinterer, im eingesetzten Zustand der Ladeplatte nahe der rückseitigen Begrenzung des Laderaums liegende Bereich der Bodenplatte nur schwer zugänglich, insbesondere ist das Verschieben und Feststellen der Ladegut-Halteelemente in diesem Bereich für einen Benutzer vergleichsweise mühsam.

Eine weitere Vorrichtung zum Arretieren von Transportgut, welche als Zubehörteil in ein Fahrzeug eingelegt und aus diesem wieder entnommen werden kann, ist aus der DE 202 11 679 U1 bekannt geworden. Die Vorrichtung besteht im Wesentlichen aus einer Auflage, die über Haftmittel an ihrer Unterseite eine feste, wieder lösbare Verbindung, insbesondere eine Klettverbindung, mit der Bodenfläche des Laderaums eingehen kann. Auf die Oberseite der Auflage wird ein zu haltendes Gepäckstück gelegt, das von flexiblen Halteeinrichtungen, wie Haltegurten, umschlungen werden kann. Dabei sind die Halteeinrichtungen an die Dimension des Gepäckstückes angepasst und lösbar miteinander verbunden. Nachteilig bei dieser Auflage, welche starr als Bodenplatte ausgebildet sein kann, ist, dass die Halteeinrichtungen fester Bestandteil der Auflage sind und der Ausbildung einer planen Ladefläche entgegenstehen.

Der Erfindung liegt die Aufgabe zu Grunde, an der Oberseite der Bodenplatte eine ebene Ladefläche zu schaffen, welche weitgehend durchgängig ausgebildet ist und frei von Anbauelementen gehalten werden kann. Weiterhin ist es eine Aufgabe der Erfindung, einen hinteren, im eingesetzten Zustand der Bodenplatte fern der Ladekante liegenden Bereich der Bodenplatte leichter zugänglich zu machen.

Die Aufgabe wird erfindungsgemäß dadurch gelöst, dass an der Oberseite der Bodenplatte Führungsschienen vorgesehen sind, die im eingesetzten zustand der Bodenplatte im Wesentlichen parallel zur Tiefenerstreckung des Laderaums ausgerichtet sind, wobei die Führungsschienen zur Aufnahme von Laufrollen ausgebildet sind.

Die Führungsschienen sind parallel zur Tiefenerstreckung des Laderaums, mit anderen Worten parallel zur Längenerstreckung der Bodenplatte ausgerichtet, so dass die Bodenplatte von keiner quer zu ihrer Längenerstreckung verlaufenden Nut oder einem Schlitz unterbrochen wird. Ein hinterer, im eingesetzten Zustand der Bodenplatte von der Ladekante entfernt liegender Bereich der Ladefläche ist bei der erfindungsgemäßen Bodenplatte dadurch leichter zugänglich, dass in die Führungsschienen ein verfahrbares Element mit Laufrollen eingesetzt und entlang der Führungsschiene in den hinteren Bereich der Bodenplatte geführt werden kann.

Die Führungsschienen bestehen zweckmäßigerweise aus einem Leichtmetall, wie Aluminium, und sind derart in die Bodenplatte eingelassen bzw. an dieser angeordnet, dass die Bodenplatte eine weitgehend ebenflächige Oberseite aufweist. Die an der Oberseite der Bodenplatte bereit gestellte Ladefläche wird bei der erfindungsgemäßen Bodenplatte lediglich durch die Führungsschienen, in der Regel zwei, durchbrochen. Dadurch sind größtmöglichste Flächenabschnitte der Bodenplatte als ebene Ladefläche nutzbar.

Die Bodenplatte ist typischerweise aus Holz oder einem Kunststoff gefertigt und an der Oberseite mit einem filzartigen Material beschichtet. Das Gewicht der Bodenplatte sowie die Flächenausdehnung und das Material der Haftmittel, beispielsweise Klettstreifen, sind derart gewählt, dass die Bodenplatte ohne ein auf ihr angeordnetes Ladegut fest, mit anderen Worten gegen ein Verrutschen gesichert, auf der Bodenfläche des Laderaums aufliegt.

Die Führungsschienen sind vorteilhafterweise als Nuten ausgebildet und weisen zusätzliche Hinterschnitte auf. Eine Nut erleichtert das Führen von Laufrollen, Führungsschlitten und anderer entlang der Führungsschienen verschiebbarer Führungsabschnitte. Durch die Hinterschnitte werden Rastpunkte definiert, in welche ein in der Führungsschiene geführtes Element einrasten und auf diese Weise arretiert werden kann.

In einer bevorzugten Ausführungsform der erfindungsgemäßen Bodenplatte erstrecken sich die Führungsschienen über die gesamte Länge der Bodenplatte und sind bevorzugt an den seitlichen Rändern der Bodenplatte angeordnet. Länge der Bodenplatte meint die Erstreckung der eingesetzten Bodenplatte parallel zur Tiefenerstreckung des Laderaums. In dieser Ausführungsform steht nahezu die gesamte Oberseite der Bodenplatte, die von den Führungsschienen seitlich eingefasst bzw. begrenzt wird, als durchgehende, ebene Ladefläche zur Verfügung. Ein weiterer Vorteil dieser Ausführungsform ist die erleichterte Zugänglichkeit aller Längen- bzw. Tiefenabschnitte der Bodenplatte, da die Länge der Führungsschienen der Länge der Bodenplatte entspricht.

In einer weiteren bevorzugten Ausführungsform ist die Bodenplatte im Wesentlichen rechteckförmig ausgebildet und erstreckt sich nahezu über die gesamte Bodenfläche des Laderaums. Die Bodenfläche wird weitgehend von der Bodenplatte abgedeckt, wodurch der gesamte Laderaum optimal zur Ladegutzugänglichkeit und/oder Ladegutsicherung genutzt werden kann.

Die Erfindung umfasst weiter ein Ladesystem zur Sicherung und Anordnung von Ladegut in einem Laderaum eines Kraftfahrzeugs, umfassend die in den Laderaum einsetzbare Bodenplatte und zumindest ein an der Bodenplatte anzuordnendes Anbauelement. Das Anbauelement kann bedarfsabhängig an der Bodenplatte angeordnet und von dieser wieder entfernt werden. Das erfindungsgemäße Ladesystem stellt eine weitgehend ebene Ladefläche zur Verfügung, welche je nach Einsatzzweck optimiert mit Anbauelementen bestückt werden kann.

Es ist darüber hinaus vorteilhaft, dass in den Führungsschienen Öffnungen zum Einsetzen von Anbauelementen vorgesehen sind. Die entsprechenden Anbauelemente können einfach und ohne Zuhilfenahme von Werkzeug in die Führungsschienen eingesetzt und entlang dieser verschoben bzw. verfahren werden.

In einer bevorzugten Ausführungsform weist das erfindungsgemäße Ladesystem ein in den Führungsschienen der Bodenplatte verfahrbares Transportelement mit Laufrollen auf, wobei das Transportelement eine geringere Länge als die Bodenplatte aufweist. Das Transportelement wird in die Führungsschienen der Bodenplatte eingesetzt und ist entlang der Führungsschienen, d.h., entlang der Tiefenerstreckung des Laderaums verfahrbar. An der Unterseite des Transportelements sind zumindest zwei Laufrollen vorgesehen, die in jeweils einer Führungsschiene geführt sind. Darüber hinaus können zusätzliche Laufrollen bzw. Laufräder vorgesehen sein, welche unabhängig von den Führungsschienen auf der Oberseite der Bodenplatte aufliegen, wodurch eine erhöhte Stabilität des Transportelements bei einer Ladegutbelastung sichergestellt wird. Weitere in den Führungsschienen geführte Gleitelemente, insbesondere Verriegelungs- und/oder Verrastungselemente an der Unterseite des Transportelements sind denkbar.

In einer weiteren bevorzugten Ausführungsform des erfindungsgemäßen Ladesystems ist das Transportelement als Wagen ausgebildet und weist bevorzugterweise einen Griff und/oder eine Eingrifföffnung auf. Der Hauptbestandteil des Wagens ist eine Platte, welche eine Zusatzladefläche darstellt. Auf diese Zusatzladefläche kann Ladegut im vorderen Bereich der Bodenplatte, d.h., nahe der Ladekante aufgesetzt und entlang der Führungsschienen in einen tieferen, mit anderen Worten weiter entfernt der Ladekante liegenden Bereich des Laderaums verschoben werden. Der Griff erleichtert einem Benutzer das Verschieben des Transportelements nach dem Einladen bzw. vor dem Ausladen. Die Führungsschienen der Bodenplatte und die Laufrollen des Transportelements sind zweckmäßigerweise derart aufeinander abgestimmt, dass das Transportelement ohne großen Kraftaufwand nach vorne bzw. nach hinten geschoben werden kann. Alternativ kann das Transportelement als Rollcontainer ausgebildet sein.

Es ist darüber hinaus vorteilhaft, dass das Transportelement Haltemittel, wie Aussparungen, Stifte, Ösen, zur Aufnahme von Zusatzelementen aufweist. Die durch das Transportelement definierte Zusatzladefläche kann auf diese Weise bedarfsabhängig in einzelne Ladeflächeriabschnitte unterteilt und/oder zur Fixierung von Ladegut eingesetzt werden.

Das erfindungsgemäße Ladesystem weist in einer weiteren bevorzugten Ausführungsform zumindest ein in den Führungsschienen verschieb- und arretierbares Positionselement mit Haltemitteln für Zusatzelemente auf. Die Positionselemente sind entlang der Führungsschienen verschiebbar und an beliebiger Stelle arretierbar. Je nach Einsatzzweck können ein oder mehrere Positionselemente in den Führungsschienen angeordnet und durch diese Positionen für Zusatzelemente definiert werden.

Das Ladesystem weist bevorzugterweise Zusatzelemente, wie Verzurrösen, Laschen, Haken, Spanngurte, Gattereinsätze, Körbe, Container auf, insbesondere wobei die Zusatzelemente auswechselbar an der Bodenplatte und/oder dem Transportelement befestigt sind. Ein oder mehrere Zusatzelemente sind vorteilhafterweise längenvariabel, bevorzugt teleskopartig ausgebildet. Auf diese Weise sind die Zusatzelemente an unterschiedliche Anforderungen, insbesondere unterschiedliche Dimensionen von Ladegütern anpassbar.

Das erfindungsgemäße Ladesystem weist einen modulartigen Aufbau auf und kann zur Sicherung und Anordnung von Ladegut sowie zur Unterteilung und leichteren Zugänglichkeit eines Laderaums eingesetzt werden. Die Bodenplatte wird einsatzoptimiert mit Anbauelementen, wie dem Transportelement, den Positionselementen und/oder Zusatzelementen, bestückt. Die Anbauelemente können bedarfsabhängig von der Bodenplatte gelöst und aus dem Laderaum entfernt werden, so dass die Bodenplatte eine ebene Ladefläche im Laderaum darstellt und nicht aus diesem entfernt werden muss.

In einer bevorzugten Ausführungsform weist das erfindungsgemäße Ladesystem einen rolloartigen Ladekantenschutz auf, der an der Vorderseite der eingesetzten Bodenplatte über die Ladekante aus dem Laderaum herausführbar ist. Der Ladekantenschutz wird bei Bedarf über die Ladekante des Kraftfahrzeugs gezogen und dient dem Schutz vor Lackschäden des Laderaums und gegen Verschmutzungen von Kleidung sowohl beim Be- und Entladen des Laderaums als auch bei einer Nutzung der Ladekante als Sitzfläche, z.B. beim Schuhwerkwechsel. Der Ladekantenschutz besteht aus einem robusten Material, beispielsweise einer Kunststofffolie. Der Ladekantenschutz ist über eine Seilführung mit Federelementen verbunden und wird durch diese nach Gebrauch wieder in den Laderaum eingezogen.

In einer weiteren bevorzugten Ausführungsform des erfindungsgemäßen Ladesysteme ist der Ladekantenschutz in einem Zwischenträger aufgenommen, der an seiner Oberseite und an seiner Unterseite Haftelemente aufweist und der im eingesetzten Zustand zwischen der Bodenfläche des Laderaums und der Bodenplatte des Ladesystems angeordnet ist. Der Ladekantenschutz ist flächig, mit anderen Worten nicht aufgewickelt, in den Zwischenträger aufgenommen und wird von diesem rahmenartig umschlossen. Der Zwischenträger wird mit äußerst geringem Platzbedarf unterhalb der Bodenplatte angeordnet, wodurch der Platzbedarf des gesamten erfindungsgemäßen Ladesystems innerhalb des Laderaums minimiert ist.

Weiter weist das erfindungsgemäße Ladesystem bevorzugt Randteile auf, die die um die eingesetzte Bodenplatte liegenden Randbereiche der Bodenfläche des Laderaums abdecken. Die Randteile können fahrzeugspezifisch ausgelegt und gefertigt werden, so dass die Bodenplatte bzw. das Ladesystem in unterschiedlichen Fahrzeugtypen eingesetzt werden kann. Die komplette Bodenfläche des Laderaums steht in dieser Ausführungsform als Ladefläche zur Verfügung, wobei die Ladefläche eine durchgängige Bodenoptik, d.h., keine Absätze aufweist.

Weitere Vorteile und Merkmale der Erfindung ergeben sich aus der Beschreibung und den Figuren der Zeichnung. Ebenso können die vorstehend genannten und die noch weiter aufgeführten Merkmale erfindungsgemäß jeweils einzeln oder in beliebigen Kombinationen miteinander verwendet werden. Die erfindungsgemäße Bodenplatte und das erfindungsgemäße Ladesystem sind in Ausführungabeiapielen in den Figuren gezeigt. Die in den Figuren gezeigten Merkmale sind rein schematisch und nicht maßstäblich zu verstehen. Es zeigt:
- Figur 1: ein Ausführungsbeispiel einer erfindungsgemäßen Bodenplatte;
- Figur 2: die in einen Laderaum eingesetzte Bodenplatte und ein auf ihr verschiebbares Transportelement;
- Fign. 3a und 3b: jeweils die Anordnungen aus Figur 2 mit einem ausgezogenen Ladekantenschutz;
- Figur 4: ein erstes Ausführungsbeispiel eines erfindungsgemäßen Ladesystems;
- Figur 5: ein zweites Ausführungsbeispiel des erfindungsgemäßen Ladesystems;
- Figur 6a: eine beispielhafte Führungsschiene;
- Figur 6b: einen Querschnitt der in Figur 6a gezeigten Führungsschiene;
- Figur 7a: ein beispielhaftes Positionselement; und
- Figur 7b: eine Seitenansicht des in Figur 7a gezeigten Positionselements.

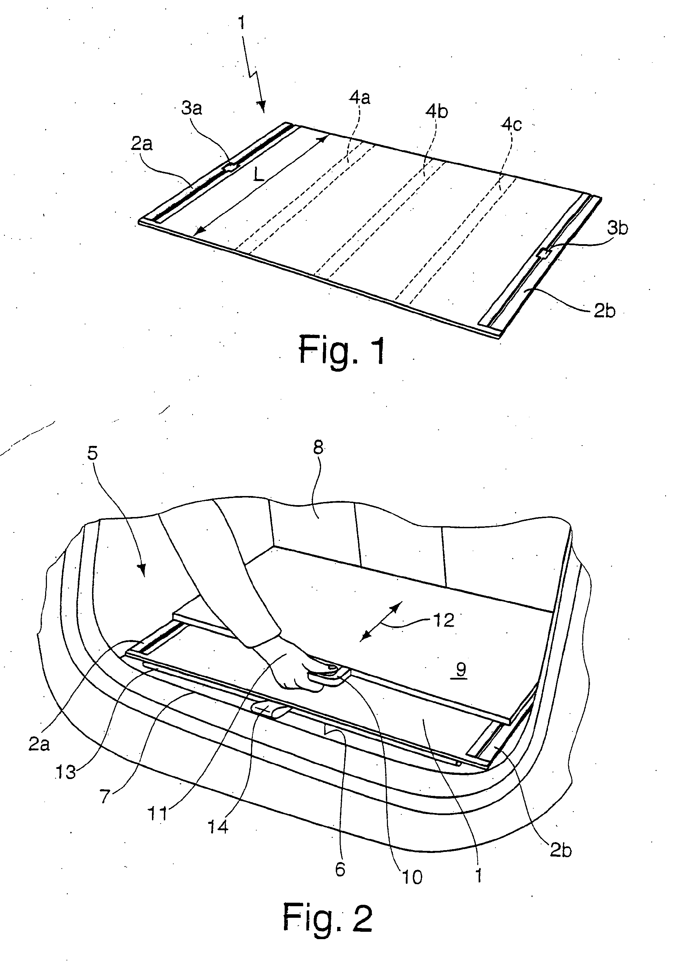

In Figur 1 ist in perspektivischer Darstellung eine rechteckförmige Bodenplatte 1 gezeigt. An beiden Seitenkanten sind Führungsschienen 2a und 2b in die Bodenplatte 1 integriert. Die Führungsschienen 2a und 2b erstrecken sich über die gesamte Länge L der Bodenplatte 1 und weisen jeweils mittig Öffnungen 3a und 3b auf. Die Länge L der Bodenplatte beträgt ca. 80 cm, ihre Breite ca. 90 cm und ihre Dicke ca. 2 cm. Das Eigengewicht der Bodenplatte 1 ist mit 6,5 kg derart gewählt, dass die Bodenplatte 1 einerseits von einem Benutzer angehoben und in einen Laderaum eingelegt werden kann, andererseits eine stabile Auflage der Bodenplatte 1 auf einer Bodenfläche gewährleistet ist. An der Unterseite der Bodenplatte 1 sind streifenförmige Haftmittel 4a, 4b und 4c aus Hakenklett vorgesehen.

In Figur 2 ist in perspektivischer Darstellung ein Laderaum 5 dargestellt, auf dessen Bodenfläche 6 die Bodenplatte 1 aufgelegt ist. Die Bodenplatte 1 erstreckt sich von einer Ladekante 7 bis zu einer Rücksitzlehne 8 des Kraftfahrzeugs. In die Führungsschienen 2a und 2b ist ein Transportelement 9 eingesetzt, welches an seiner Vorderkante einen Griff 10 aufweist. Das Transportelement 9 weist eine Länge von 45 cm und, wie die Bodenplatte 1, eine Breite von 90 cm und eine Dicke von 2 cm auf. In das Transportelement 9 ist ein nicht gezeigter Verriegelungsmechanismus integriert: In die Führungsschiene 2a und 2b sind zusätzlich zu den Laufrollen jeweils ein Verriegelungselement eingesetzt, welches in einer Entriegelungsstellung entlang der entsprechenden Führungsschiene 2a oder 2b verschoben werden kann und in einer Verriegelungsstellung positionsstabil arretiert ist. Über eine Seilführung sind die Verriegelungselemente mit dem Griff 10 verbunden, in dem ein Betätigungselement, beispielsweise eine Drucktaste, vorgesehen ist. Das Ver- bzw. Entriegeln kann alternativ durch ein Umklappen des Griffs 10 erfolgen. Es ist darüber hinaus denkbar, die Verriegelungselemente unmittelbar an den Laufrollen des Transportelements 9 anzuordnen.

In der Figur ist gezeigt, wie ein Benutzer mit einer Hand 11 den Griff 10 betätigt, um das Transportelement 9 entlang einer Tiefenerstreckung 12 des Laderaums 5 zu verfahren. Das Transportelement 9 stellt einen verfahrbaren Ladeboden dar, der in den Führungsschienen 2a und 2b der Bodenplatte 1 in beliebige Stellungen verfahren und dort arretiert werden kann. Das Transportelement 9 dient zusätzlich als Ablage für Ladegut und ist typischerweise für eine Belastung von ca. 30 kg ausgelegt. Durch Anheben des Griffs 10 kann das Transportelement 9 verschoben werden. Beim Loslassen des Griffs 10 rastet das Transportelement 9 bzw. die Verriegelungselemente in Rastpunkte ein, welche durch Hinterschnitte in den Führungsschienen 2a und 2b ausgebildet sind. An der Vorderseite der Bodenplatte 1 sind eine vordere Spreizstange 13 und eine Lasche 14 eines von der Bodenplatte 1 überdeckten Ladekantenschutzes gezeigt.

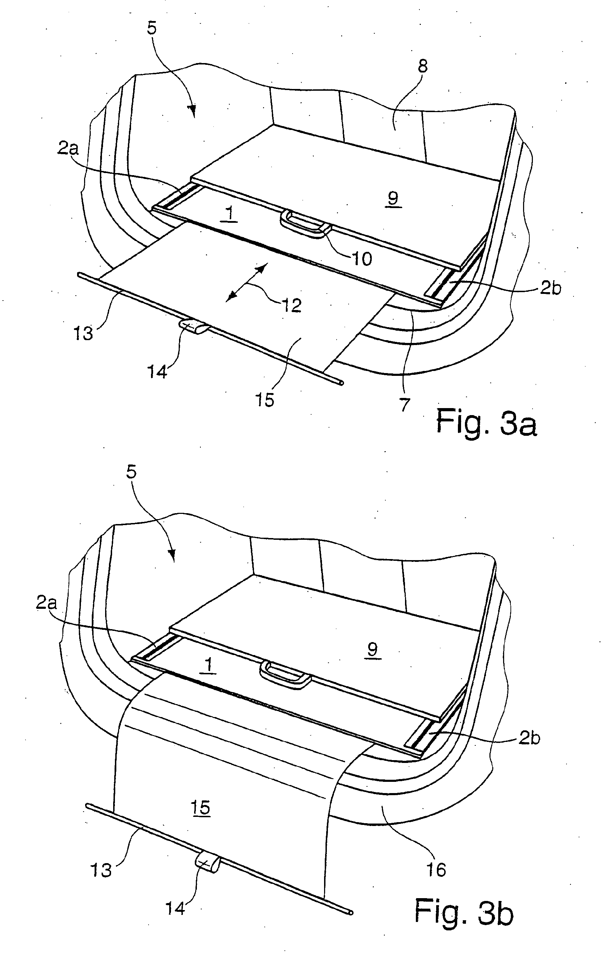

In Figur 3a ist die Bodenplatte 1, die sich zwischen der Ladekante 7 und der Rücksitzlehne 8 im Laderaum 5 erstreckt, gezeigt. In die Führungsschienen 2a und 2b ist das Transportelement 9 mit dem mittig angeordneten Griff 10 eingesetzt. Das Transportelement 9 liegt an der Hinterseite des Laderaumes 5, d.h., an der Rücksitzlehne 8 an. Über die Ladekante 7 des Laderaums 5 ist ein Ladekantenschutz 15 herausgeführt. Der flächen- bzw. rolloartige Ladekantenschutz 15 wird durch die vordere Spreizstange 13 gespannt und wird von einem Benutzer zweckmäßigerweise mit Hilfe der Lasche 14 bedient. Der Ladekantenschutz 15 liegt in einer horizontalen Ebene und kann aus dieser Zwischenstellung wieder parallel zur Tiefenerstreckung 12 des Laderaums 5 unter die Bodenplatte 1 geführt werden. Der Rückzug- bzw. Rückholmechanismus wird durch Triebfedern bewirkt, welche über einen Seilzug mit einer nicht gezeigten hinteren Spreizstange des Ladekantenschutzes 15 verbunden sind.

In Figur 3 b ist die Gebrauchsstellung des in Figur 3a gezeigten Ladekantenschutzes 15 gezeigt. Der Ladekantenschutz 15 ist nahezu vollständig aus dem Laderaum 5 geführt und wird durch die Gewichtskraft der vorderen Spreizstange 13 in der gezeigten Stellung gehalten. Der Ladekantenschutz 15 deckt die Stoßstange 16 des Kraftfahrzeuges nahezu über die gesamte Breite der Öffnung des Laderaums 5 ab. Nach Gebrauch wird der Ladekantenschutz 15 an der Lasche 14 angehoben und parallel zu den Führungsschienen 2a und 2b unter die Bodenplatte 1 zurückgeführt.

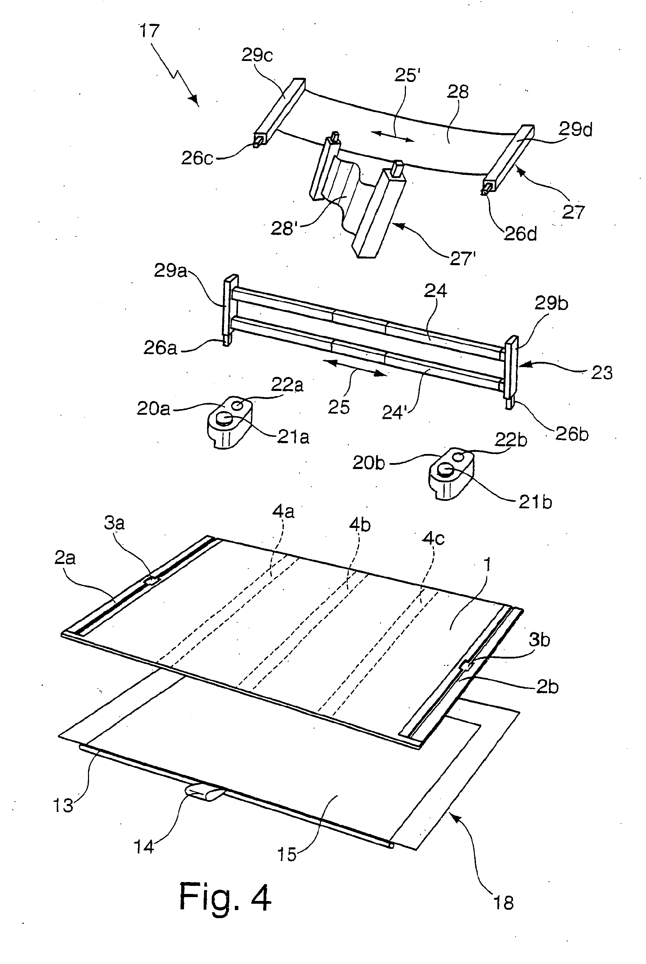

In Figur 4 ist ein schematischer Aufbau eines Ladesystems 17 gezeigt. Als Grund- bzw Basisplatte des Ladesystems 17 dient die Bodenplatte 1, welche mit Hilfe der Haftmittel 4a, 4b und 4c an einer Bodenfläche befestigt werden kann. Zwischen der Bodenplatte 1 und einer Bodenfläche kann ein Zwischenträger 18 angeordnet werden, in dem der Ladekantenschutz 15 aufgenommen ist. An der Ober- und der Unterseite des Zwischenträgers 18 sind Haftelemente, typischerweise Klettstreifen, vorgesehen, die eine Fixierung des Ladesystems 17 auf der Bodenfläche eines Laderaums ermöglichen. Der Zwischenträger 18 fasst den Ladekantenschutz 15 rahmenartig ein und ist in seinen Dimensionen an die Bodenplatte 1 derart angepasst, dass im eingezogenen Zustand des Ladekantenschutzes 15 lediglich die vordere Spreizstange 13 und die Lasche 14 sichtbar sind, wie in Figur 2 gezeigt. An der Oberseite der Bodenplatte 1 sind in die Öffnungen 3a und 3b Positionselemente 20a und 20b einsetzbar und entlang der Führungsschienen 2a und 2b verschiebbar. Die Positionselemente 20a und 20b weisen an ihrer Oberseite jeweils einen Betätigungsknopf 21a und 21b sowie jeweils eine Ausnehmung 22a und 22b auf. Die Positionselemente 20a und 20b sind mittels Klemmelementen in den Führungsschienen 22a und 22b arretierbar.

In den Positionselementen 20a und 20b kann ein Teleskoprahmen 23 aufgenommen werden. Der Teleskoprahmen 23 dient zur rutschsicheren Befestigung von Ladegütern. Seine beiden Querstangen 24 und 24' sind teleskopartig ausgebildet und, wie mit Pfeil 25 angedeutet, in ihrer Länge verstellbar. An dem Teleskoprahmen 23 sind Steckstifte 26a und 26b vorgesehen, mit Hilfe derer der Teleskoprahmen 23 in die Aussparung 22a und 22b der Positionselemente 20a und 20b eingesetzt werden kann. Alternativ oder zusätzlich kann ein Gepäckhalter 27 mit einem flexiblen Gurtband 28 auf der Bodenplatte 1 angeordnet werden. Das Gurtband 28 ist in Seitenteilen 29a und 29b aufgewickelt bzw. aufgerollt und entlang der Richtung 25' ausziehbar. Der Gepäckhalter 27 eignet sich zur Befestigung unterschiedlichster Einzelgepäckstücke und ist an die entsprechenden Größen anpassbar. Der Gepäckhalter 27' weist ein Gurtband 28' aus einem elastisch dehnbaren Material auf. Die Seitenteile 29a und 29b des Teleskoprahmens 23 werden zweckmäßigerweise in beide Führungsschienen 2a und 2b eingesetzt. Beide Seitenteile 29c und 29d des Gepäckhalters 27 werden bevorzugt in der gleichen Führungsschiene 2a oder 2b angeordnet.

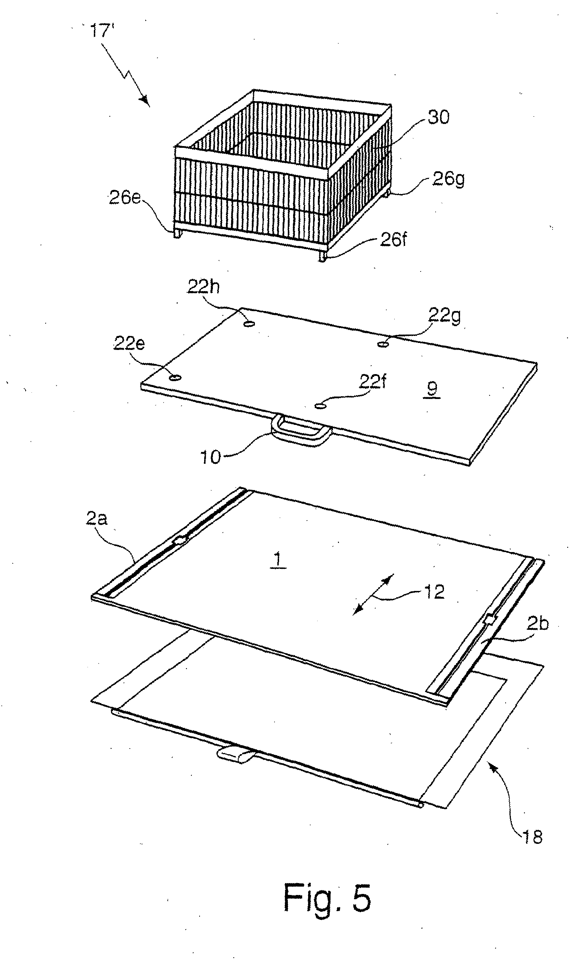

Das in Figur 5 gezeigte Ladesystem 17' unterscheidet sich von dem in Figur 4 gezeigten darin, dass oberhalb des Zwischenträgers 18 und der Bodenplatte 1 das Transportelement 9 angeordnet wird. Das Transportelement 9 ist entlang der Führungsschiene 2a und 2b verfahrbar (mit Pfeil 12 angedeutet). Das Transportelement 9 weist an der Vorderkante den Griff 10 und an seiner Oberseite Aussparungen 22e, 22f, 22g und 22h auf. Die Aussparung 22e, 22f, ... sind in einem Rechteck angeordnet und dienen als Absteckbuchsen für Steckstifte 26e, 26f, ... einer Klappbox 30. Die korbähnliche Klappbox 30 ist aus Kunststoff gefertigt und kann im eingesetzten Zustand nicht mehr auf dem Transportelement 9 verrutschen. Die Klappbox 30 ist für den Transport von Kleinteilen geeignet.

Der modul- bzw. baukastenartige Aufbau der Ladesysteme 17 und 17' erlaubt eine beliebige Kombination von Anbauelementen, wie der Positionselemente 20a und 20b, des Transportelements 9, des Ladekantenschutzes 15 und der Zusatzelemente, des Teleskoprahmens 23, der Gepäckhalter 27 und 27' und der Klappbox 30, mit der Bodenplatte 1.

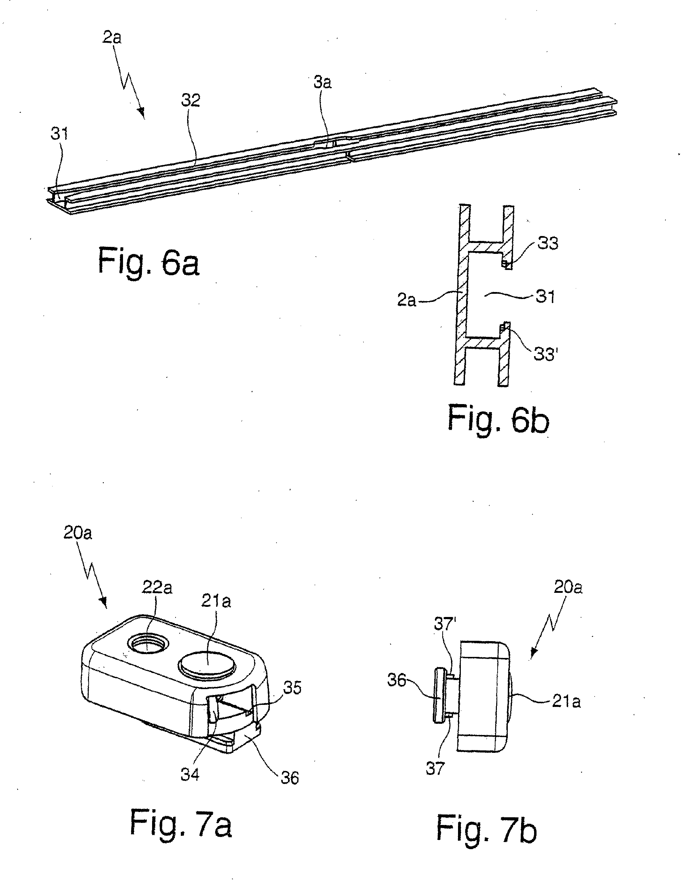

In Figur 6a ist die Führungsschiene 2a in Alleinstellung gezeigt. Die Führungsschiene 2a weist ein Nutprofil 31 mit einem durch Rastpunkte definierten Rastabschnitt 32 auf, welcher sich über die gesamte Länge der Führungsschiene 2a erstreckt und nur durch die Öffnung 3a unterbrochen wird.

In Figur 6b ist ein Schnitt durch die FÜhrungsschiene 2a quer zu ihrer Längenerstreckung gezeigt. An der Innenseite des Nutprofils 31 sind durch Hinterschnitte 33 und 33' Rastpunkte definiert.

Das in Figur 7a in perspektivischer Darstellung gezeigte Positionselement 20a weist einen Riegel 34 auf, welcher aus der gezeigten Stellung in eine Stellung oberhalb einer Nut 35 geführt werden kann. Das Positionselement 20a wird über einen im Wesentlichen T-köpfförmigen Führungsabschnitt 36 innerhalb einer Führungsschiene geführt. Das Positionselement 20a wird an der Öffnung der Führungsschiene eingesetzt. Anschließend wird der Riegel 34 in die nicht gezeigte Stellung über die Nut 35 geführt. Durch ein Betätigen bzw. Drücken des Betätigungsknopfes 21a wird das Positionselement 20a entriegelt und kann entlang der Führungsschiene verschoben werden. Beim Loslassen des Betätigungsknopfes 21a verrastet das Positionselement 20a selbsttätig in der Führungsschiene. Sobald der Riegel 34 in die gezeigte Stellung geführt wird, ist das Positionselement 20a spielfrei, mit anderen Worten ist der Betätigungsknopf 21a blockiert.

Figur 7b zeigt das Positionselement 20a aus Figur 7a in Seitenansicht. Am Führungsabschnitt 36 sind Rastbolzen 37 und 37' vorgesehen, welche in der gezeigten Stellung, d.h. bei nichtbelastetem Betätigungsknopf 21a in die Rastpunkte der Führungsschiene eingreifen.

Es versteht sich, dass die Bodenplatte 1 wie auch das Transportelement 9 aus Materialien gefertigt werden können, die bei gewünschter Festigkeit und Steifigkeit das Gewicht dieser Gegenstände weiter reduzieren (Faserverbundwerkstoffe, z.B. mit Kohlefasern oder Leichtmetalle, z.B. Magnesium, können verwendet werden). Das Transportelement 9 ist im eingesetzten Zustand auf der Bodenplatte 1 immer arretiert und muss zum Verfahren auf der Bodenplatte 1 entriegelt werden. Die Verriegelung des Transportelements 9 mit der Bodenplatte 1 erfolgt in der Regel selbsttätig, d.h., wird das Transportelement 9 nicht im entriegelten Zustand verschoben, verriegelt es sich von selbst an der Bodenplatte 1. Der Ladekantenschutz 15 ist über einen Federmechanismus so gehalten, dass dieser den Ladekantenschutz 15 in den Kofferraum einfährt, wenn die Schwerkraft der Spreizstange 13 aufgehoben wird, die der Rückholfederkraft entgegenwirkt.

Eine Bodenplatte 1 kann in einen Kofferraum eingelegt und mit Hilfe von Haftmitteln 4a, 4b, 4c lösbar auf einer Bodenfläche des Laderaums fixiert werden. Über die gesamte Länge L der Bodenplatte 1 erstrecken sich Führungsschienen 2a, 2b, zwischen denen eine ebene Ladefläche mit durchgängiger Bodenoptik bereit gestellt wird. Mit Hilfe von Anbauelementen, welche an der Bodenplatte 1 angeordnet und bedarfsabhängig entlang der Führungsschienen 2a, 2b verschoben werden können, kann Ladegut auf der Ladefläche fixiert und ein hinterer Bereich der Bodenplatte 1 leichter zugänglich gemacht werden.

## Patentansprüche

1. Bodenplatte (1), einsetzbar in einen Laderaum (5) eines Kraftfahrzeuges, an deren Unterseite Haftmittel (4a, 4b, 4c) zur lösbaren Fixierung der Bodenplatte (1) auf der Bodenfläche (6) des Laderaums (5) vorgesehen sind,
**dadurch gekennzeichnet, dass**
an der Oberseite der Bodenplatte (1) Führungsschienen (2a, 2b) vorgesehen sind, die im eingesetzten Zustand der Bodenplatte (1) im Wesentlichen parallel zur Tiefenerstrekkung (12) des Laderaums (5) ausgerichtet sind, wobei die Führungsschienen (2a, 2b) zur Aufnahme von Laufrollen ausgebildet sind.

2. Bodenplatte nach Anspruch 1, **dadurch gekennzeichnet, dass** die Führungsschienen (2a, 2b) als Nuten ausgebildet sind und zusätzliche Hinterschnitte (33, 33') aufweisen.

3. Bodenplatte nach Anspruch 1 oder 2, **dadurch gekennzeichnet, dass** sich die Führungsschienen (2a, 2b) über die gesamte Länge (L) der Bodenplatte (1) erstrecken und bevorzugt an den seitlichen Rändern der Bodenplatte (1) angeordnet sind.

4. Bodenplatte nach einem der vorhergehenden Ansprüche, **dadurch gekennzeichnet, dass** die Bodenplatte (1) im Wesentlichen rechteckförmig ausgebildet ist und sich nahezu über die gesamte Bodenfläche (6) des Laderaums (5) erstreckt.

5. Ladesystem (17) zur Sicherung und Anordnung von Ladegut in einem Laderaum (5) eines Kraftfahrzeuges, umfassend eine in den Laderaum (5) einsetzbare Bodenplatte (1) nach einem der vorhergehenden Ansprüche und zumindest ein an der Bodenplatte (1) anzuordnendes Anbauelement.

6. Ladesystem nach Anspruch 5, **dadurch gekennzeichnet, dass** in den Führungsschienen (2a, 2b) Öffnungen (3a, 3b) zum Einsetzen von Anbauelementen vorgesehen sind.

7. Ladesystem nach Anspruch 5 oder 6, **dadurch gekennzeichnet, dass** das Ladesystem (17) ein in den Führungsschienen (2a, 2b) der Bodenplatte (1) verfahrbares Transportelement (9) mit Laufrollen aufweist, wobei das Transportelement (9) eine geringere Länge (L) als die Bodenplatte (1) aufweist.

8. Ladesystem nach Anspruch 7, **dadurch gekennzeichnet, dass** das Transportelement (9) als Wagen ausgebildet ist und bevorzugterweise einen Griff (10) und/oder eine Eingrifföffnung aufweist.

9. Ladesystem nach Anspruch 7 oder 8, **dadurch gekennzeichnet, dass** das Transportelement (9) Haltemittel (22e, 22f, ...), wie Aussparungen, Stifte, Ösen, zur Aufnahme von Zusatzelementen (30) aufweist.

10. Ladesystem nach einem der Ansprüche 5 bis 9, **dadurch gekennzeichnet, dass** das Ladesystem (17) zumindest ein in den Führungsschienen (2a, 2b) verschieb- und arretierbares Positionselement (20a, 20b) mit Haltemitteln (22a, 22b) für Zusatzelemente (23, 27, 27') aufweist.

11. Ladesystem nach einem der Ansprüche 5 bis 10, **dadurch gekennzeichnet, dass** das Ladesystem (17) Zusatzelemente (23, 27, 27', 30) wie Verzurrösen, Laschen, Haken, Spanngurte, Gattereinsätze, Körbe, Container, aufweist, insbesondere wobei die Zusatzelemente (23, 27, 27', 30) auswechselbar an der Bodenplatte (1) und/oder dem Transportelement (9) befestigt sind.

12. Ladesystem nach Anspruch 11, **dadurch gekennzeichnet, dass** ein oder mehrere Zusatzelemente (23, 27, 27') längenvariabel, bevorzugt teleskopartig ausgebildet sind.

13. Ladesystem nach einem der Ansprüche 5 bis 12, **dadurch gekennzeichnet, dass** das Ladesystem (17) einen rolloartigen Ladekantenschutz (15) aufweist, der an der Vorderseite der eingesetzten Bodenplatte (1) über die Ladekante (7) aus dem Laderaum (5) herausführbar ist.

14. Ladesystem nach Anspruch 13, **dadurch gekennzeichnet, dass** der Ladekantenschutz (15) in einem Zwischenträger (18) aufgenommen ist, der an seiner Oberseite und an seiner Unterseite Haftelemente aufweist und der im eingesetzten Zustand zwischen der Bodenfläche (6) des Laderaums (5) und der Bodenplatte (1) des Ladesystems (17) angeordnet ist.

15. Ladesystem nach einem der Ansprüche 5 bis 14, **dadurch gekennzeichnet, dass** das Ladesystem (17) Randteile aufweist, die die um die eingesetzte Bodenplatte (1) liegenden Randbereiche der Bodenfläche (6) des Laderaums (5) abdecken.
